# DEMANDE DE BREVET EUROPEEN

(11) **EP 1 162 843 A1**
(43) Date de publication de la demande: **12.12.2001**
(21) Numéro de dépôt: 01401440.1
(22) Date de dépôt: 01.06.2001
(51) Int. Cl.: H04N 7/167

(54) **Procédé d'enregistrement sécurisé dans un décodeur de télévision**

(30) Priorité: 06.06.2000 FR 0007256
(71) Demandeur: SAGEM S.A., 75015 Paris (FR)
(72) Inventeur: Cummings, M. John, 78600 Maisons-Laffitte (FR); Mortreux, M. Bruno, 76530 Les Essarts (FR)
(74) Mandataire: Schmit, Christian Norbert Marie

(57) **Abrégé**

Pour enregistrer un message (3) embrouillé dans un décodeur (2) de télévision à l'aide d'une clé (10) afin d'y accéder à une date différée on enregistre le message embrouillé dans une mémoire (11) du décodeur et on chiffre la clé en utilisant des paramètres (13) d'identification uniques du décodeur. Ainsi, le message embrouillé ne pourra être accessible qu'avec le décodeur qui a permis de chiffrer la clé permettant de désembrouiller le message ainsi enregistré. On peut ainsi visualiser en clair et donc enregistrer un message embrouillé en ayant les droits d'accès à ce message et le regarder à une date ultérieure même si on n'a plus les droits d'accès, la date ultérieure arrivant par exemple après une date limite de validité de ces droits.

## Description

La présente invention a pour objet un procédé d'enregistrement sécurisé dans un décodeur de télévision. Elle s'applique au domaine de l'audiovisuel par réseau câblé ou par faisceau hertzien voire par satellite. Le but de l'invention est de permettre d'enregistrer des messages à visualiser en temps différé dans le décodeur de télévision tout en s'assurant que le décodeur qui enregistre ce message est bien un décodeur autorisé à le faire.

Cette invention s'applique plus particulièrement aux messages dont un accès est limité, c'est à dire qu'en fait ils sont embrouillés.

Actuellement, il est connu d'émettre des messages dont un accès est limité. Pour cela, un opérateur auquel le décodeur de télévision est relié émet des messages embrouillés. Afin de pouvoir désembrouiller le message, il est nécessaire qu'un utilisateur du décodeur considéré soit muni d'un moyen d'authentification lui donnant accès à ces messages embrouillés. Généralement, ce moyen d'authentification est une carte à puce que l'on insère dans un lecteur de carte à puce placé dans le décodeur de télévision. Ainsi, lorsque cette carte à puce est présente dans le lecteur alors celle-ci permet de déchiffrer la clé qui est émise en même temps que le message embrouillé et ce de manière chiffrée. Un utilisateur non muni de cette carte à puce ne pourra pas déchiffrer la clé et donc désembrouiller le message.

Cet état de la technique fait apparaître un problème de sécurité lié à l'enregistrement de tels messages embrouillés. En effet, lorsqu'un utilisateur souhaite recevoir un message embrouillé pendant son absence pour pouvoir le visualiser en temps différé, c'est à dire à une date ultérieure, il existe alors une première solution qui consiste à enregistrer le message embrouillé en clair c'est à dire de façon désembrouillée. Cette première solution n'est pas très efficace car tout tiers peut avoir accès à ce message en clair. Une deuxième solution consiste à enregistrer le message de manière embrouillée dans une mémoire de sauvegarde ainsi que la clé chiffrée qui l'accompagne. Cette deuxième solution, plus efficace, présente toutefois un problème c'est que certaines cartes à puce sont à accès limité dans le temps. Ainsi il se peut que lorsque l'utilisateur voudra visualiser le message embrouillé qu'il a enregistré il n'aura plus de droits d'accès à ce message puisque sa carte sera arrivée au terme de sa validité. Il ne pourra donc pas visualiser le message embrouillé pour lequel il avait accès lors de sa diffusion puisque la date à laquelle le message est visualisé est une date postérieure à la date limite de validité de la carte à puce.

La présente invention a pour objet de remédier à ce problème en proposant un moyen d'enregistrement sécurisé, c'est à dire sans que des tiers puissent y avoir accès s'ils n'y sont pas autorisés. Pour cela, on enregistre le message embrouillé dans une mémoire du décodeur de télévision tout en générant une clé chiffrée mais dont un chiffrement est indépendant des caractéristiques de la carte à puce. En outre et selon une caractéristique essentiel de l'invention, on assure que seul le décodeur qui a permis de générer la clé chiffrée pourra lire en clair le message embrouillé placé dans la mémoire de sauvegarde.

La présente invention a donc pour objet un procédé d'enregistrement sécurisé, dans une mémoire de sauvegarde d'un décodeur de télévision, d'un message reçu par le décodeur et embrouillé par une première clé, caractérisé en ce que la première clé est chiffrée par un moyen de chiffrement du décodeur et enregistrée dans la mémoire de sauvegarde du décodeur avec le message embrouillé.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : un synoptique illustré montrant un fonctionnement du procédé de l'invention.
Figure 2 : un exemple simplifié d'une architecture de décodeur permettant de mettre en oeuvre le procédé de l'invention.

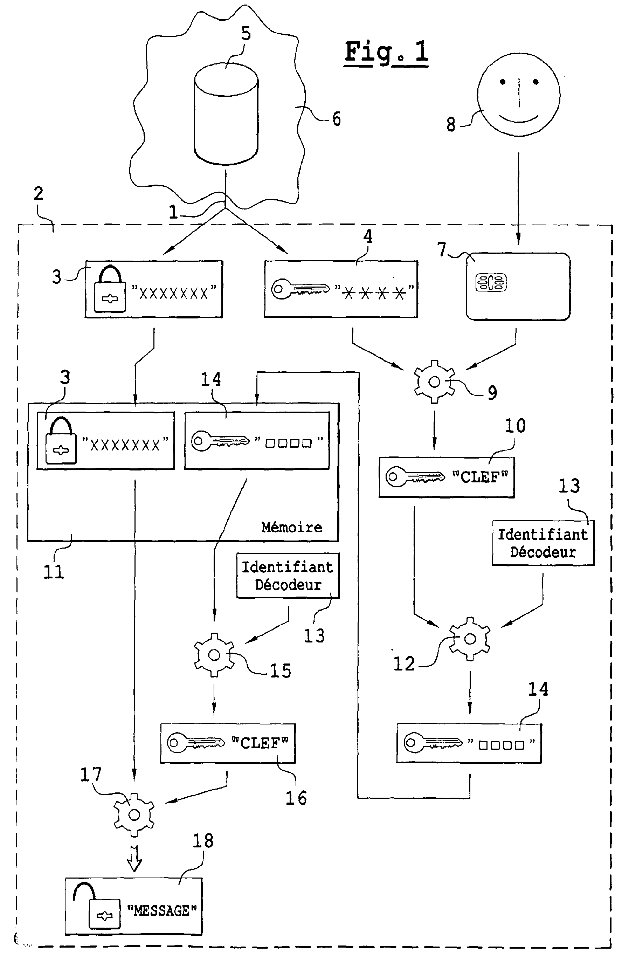

La figure 1 montre donc un synoptique illustré montrant un fonctionnement du procédé de l'invention. Ce synoptique, dans un souci de clarté, ne fait apparaître que les éléments principaux utiles au procédé de l'invention.

Ainsi dans une première phase, un décodeur 2 reçoit un message 3 embrouillé que l'on symbolise par la suite "xxxxxxx" ainsi qu'une clé 4 chiffrée que l'on symbolise par la suite "****". Le message 3 et la clé 4 sont émis à partir d'un serveur 5 de messages dans un réseau 6 de vidéo communication et au travers d'une liaison 1. La liaison 1 entre le serveur 5 et le décodeur 2 peut être un réseau câblé, une liaison hertzienne ou encore une liaison satellite ou tout autre support de communication. Ainsi, pour pouvoir visualiser le message 3 sous une forme désembrouillée, il est tout d'abord nécessaire de déchiffrer la clé 4. Pour cela, on utilise généralement une carte 7 à puce. Cette carte 7 permet d'identifier un utilisateur 8 ou plutôt de donner un accès à l'utilisateur 8 au message 3.

Dans ce but, on utilise un moyen 9 de déchiffrement généralement présent dans la carte 7. Ainsi, la clé 4 est envoyée au moyen 9 de la carte 7, pendant une phase 2, pour y être déchiffrée. Suite à cette phase 2 la carte 7 émet alors une clé 10 correspondant à la version déchiffrée de la clé 4 que l'on peut alors symboliser par la suite "CLEF". C'est cette clé 10 qui permet de désembrouiller le message 3 et afin de pouvoir le visualiser dans de bonnes conditions.

Dans l'invention, l'utilisateur 8 souhaite enregistrer le message 3 dans une mémoire 11 de sauvegarde afin de pouvoir le visualiser en temps différé par rapport à une date d'émission par le serveur 5. Ainsi, selon une caractéristique essentielle de l'invention, le décodeur 2 coopère avec un moyen 12 de chiffrement pour chiffrer la clé 10. Dans un exemple de mise en oeuvre du procédé la clé 10 est envoyée au moyen 12. En outre, le moyen 12 utilise un moyen 13 d'identification du décodeur 2 pour chiffrer la clé 10. Ce moyen 13 peut être un identifiant du décodeur tel qu'un numéro de série unique par exemple. Ce moyen 13 peut aussi très bien être un numéro secret quelconque et unique, chaque numéro étant alors associé à un seul décodeur. Cependant, on considérera, à titre d'exemple, que le moyen 13 correspond au numéro de série du décodeur 2.

En conséquence, on génère, dans une phase 3, une clé 14 chiffrée mais différente de la clé 4 pouvant être représenté par la suite " ". Ainsi, cette clé 14 est associée au décodeur 2 et non pas avec la carte 7 comme pour la clé 4.

Dans une phase 4, on mémorise la clé 14. A cet instant, la mémoire 11 comporte le message 3 embrouillé et la clé 14 correspondant à la clé 10 mais chiffrée en utilisant le moyen 13 d'identification du décodeur 2.

Lorsque l'utilisateur 8 veut visualiser le message 3 présent dans la mémoire 11, il faut tout d'abord déchiffrer la clé 14, lors d'une phase 5 de déchiffrement, pour passer de la suite " ", correspondant à la clé 14, à la suite "CLEF" afin d'autoriser une visualisation de ce message 3. Pour cela, on lit une valeur de la clé 14 dans la mémoire 11 et on l'envoie à un moyen 15 de déchiffrement. Ce moyen 15 utilise en outre le moyen 13 d'identification du décodeur 2 c'est à dire par exemple le numéro de série. Cela permet de vérifier que l'on est bien dans le même décodeur qui a permis le chiffrement de la clé 10. Ainsi, on obtient une clé 16 identique à la clé 10 que l'on va ainsi représenter aussi par la suite "CLEF".

Dans une phase 6 de désembrouillage, on envoie le message 3 à un moyen 17 de désembrouillage qui permet d'obtenir un message 18 correspondant à la version en clair du message 3, pouvant alors être représenté par la suite "MESSAGE". Il faut cependant que la clé 16 corresponde bien à la clé 10, laquelle clé 16 est évidemment envoyée au moyen 17 et utilisée par ce dernier.

Dans un exemple préféré de mise en oeuvre du procédé de l'invention, c'est le décodeur 2 qui est muni des moyens 12 et 15 pouvant se présenter sous la forme de programmes de chiffrement et de déchiffrement des clés 10 et 14 respectivement. Ainsi, la carte 7 ne sera utilisée qu'une seule fois afin de servir de contrôleur d'accès au message 3 embrouillé. Cette phase de contrôle d'accès aura lieu par exemple lors de la phase d'enregistrement à la date de diffusion de ce message 3. En effet, si la carte 7 n'autorise pas un accès de l'utilisateur 8 au message 3 alors les phases 3, 4, 5 et 6 n'auront pas lieu d'être mises en oeuvre puisque il n'y a pas la possibilité de visualiser en clair le message 3 à la date de diffusion.

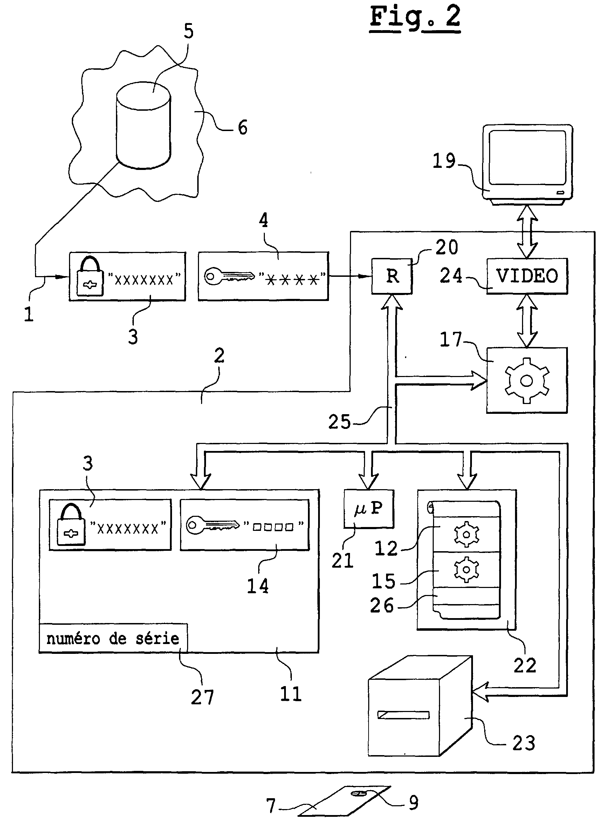

La figure 2 montre un exemple simplifié d'une architecture du décodeur 2 permettant de mettre en oeuvre le procédé de l'invention. Ainsi, le décodeur 2 est donc relié d'une part au serveur 5 du réseau 6 par la liaison 1 et d'autre part à un téléviseur 19. Le décodeur 2 comporte principalement un dispositif 20 de réception relié à la liaison 1 et recevant donc des messages tels que le message 3 embrouillé et la clé 4 correspondant à la clé 10 chiffrée par exemple par l'opérateur du réseau 6 ou par le producteur du message 3 embrouillé. Le décodeur 2 comporte en outre la mémoire 11 de la figure 1, un microprocesseur 21 commandé notamment par les moyens 12 et 15 (figure 1) présents dans une mémoire 22 de programme sous forme de programmes de chiffrement et de déchiffrement respectivement. En outre, le décodeur 2 comporte un lecteur 23 de carte à puce permettant de coopérer avec la carte 7. Ainsi, le message 3 et la clé 4 sont reçus par le récepteur 20 puis la clé 4 est envoyée par le microprocesseur 21 à la carte 7 afin d'y être traitée. La carte 7 renvoie alors au microprocesseur 21 la clé 4 (figure 1) déchiffrée.

Le programme 12 dans la mémoire 22 commande en conséquence le microprocesseur 21 afin de produire la clé 14 et de la sauvegarder dans la mémoire 11 avec le message 3 embrouillé. Le programme 15 de la mémoire 22 permet quant à lui de déchiffrer la clé 14. Une fois la clé 14 déchiffrée c'est à dire une fois la clé 16 obtenue (figure 1), cette dernière est envoyée au moyen 17 prenant généralement la forme, dans le décodeur 2, d'un circuit intégré dédié à la fonction de désembrouillage. Puis, le message 3 est envoyé au moyen 17 qui peut désembrouiller le message 3 afin d'en obtenir une version dite en clair. Cette version en clair est envoyée par exemple à un moyen 24 de gestion vidéo. Ce moyen 24 a en charge de traiter les signaux produits par le moyen 17 et de les mettre sous une forme utilisable par le téléviseur 19 généralement des signaux analogiques ou même un signal vidéo composite.

Bien évidemment, les éléments du décodeur 2 sont reliés entre eux par un bus 25 afin de permettre une communication entre ces différents éléments et ce généralement sous le contrôle du microprocesseur 21 commandé par un programme 26 de gestion du décodeur de la mémoire 22.

On a vu que dans un exemple préféré les moyens 12 et 15 étaient présents dans le décodeur et gérés par le décodeur. Cependant, dans une variante, on peut envisager de placer les moyens 12 et 15 dans une carte à puce telle que la carte 7 par exemple. La carte 7 aurait alors la charge de passer de la clé 4 à la clé 14 comme précédemment. Dans ce cas, le microprocesseur 21 envoie à la carte 7, dans cet exemple, l'identifiant du décodeur 2 et donc plus généralement le moyen 13. On peut aussi envisager de munir le décodeur 2 d'un composant de sécurité sous forme d'un circuit intégré notamment. Ce composant permettrait de mettre en oeuvre les moyens 12 et 15 dans un environnement sécurisé comme dans une carte à puce.

En outre, le moyen 13 d'identification du décodeur peut être un numéro de série mémorisé dans la mémoire 11 à un emplacement 27. Dans une variante, on limite un accès au moyen 13 par exemple en chiffrant le numéro de série mémorisé à l'emplacement 27 par un programme de chiffrage et déchiffrage présent dans la mémoire 22 de programme par exemple.

Un programme de chiffrement et ou de déchiffrement utilisé pour les moyens 12 et 15 est fonction en fait de la complexité et du niveau de sécurité recherché pour cet enregistrement sécurisé. En effet, de manière la plus simple possible un programme de base pourra être une opération logique de type OU-EXCLUSIF entre le numéro de série et la valeur de la clé 10. Bien sûr, il est possible d'utiliser des algorithmes beaucoup plus évolués et parfaitement connus du domaine de la cryptologie.

Dans une variante, on produit un message composite à chiffrer en réalisant une concaténation entre la valeur de la clé 10 et la valeur de l'identifiant du décodeur 2 par exemple son numéro de série. Ainsi, et selon un exemple de réalisation, on réalise cette concaténation entre une valeur chiffrée, par un programme de chiffrement (non représenté), du numéro de série et la valeur de la clé 10 afin de ne pas avoir dans la clé 14 une faille de sécurité. En effet, si on utilisait la valeur du numéro de série en clair et que celle-ci est accessible pour une raison ou pour une autre alors la clé 14 résultante sera d'un très faible niveau de sécurité puisqu'une partie du message est parfaitement connue. En outre, le fait de placer ce programme de chiffrement déchiffrement dans une carte à puce renforce encore la sécurité de cette réalisation.

Par contre, le chiffrement de la valeur du numéro de série implique, pour les mêmes raisons, que l'on ne sauvegarde pas cette valeur chiffrée dans un endroit accessible. D'ailleurs, il y a peu d'intérêt à sauvegarder la valeur chiffrée du numéro de série puisqu'il suffira de tout d'abord déchiffrer la clé 14 puis de déchiffrer le numéro de série chiffré ainsi obtenu et de comparer cette valeur déchiffrée avec le numéro de série mémorisé à l'emplacement 27. Si ces deux informations sont égales alors le message 3 pourra être désembrouillé par le moyen 17.

## Revendications

1. Procédé d'enregistrement sécurisé, dans une mémoire (11) de sauvegarde d'un décodeur (2) de télévision, d'un message (3) reçu par le décodeur et embrouillé par une première clé (10), **caractérisé en ce que** la première clé est chiffrée par un moyen (12) de chiffrement du décodeur et enregistrée dans la mémoire de sauvegarde du décodeur avec le message embrouillé.

2. Procédé selon la revendication 1 **caractérisé en ce que** on chiffre la première clé en utilisant un moyen (13) d'identification du décodeur.

3. Procédé selon la revendication 2 **caractérisé en ce que** le moyen d'identification est un identifiant du décodeur.

4. Procédé selon la revendication 3 **caractérisé en ce que** :
- on chiffre l'identifiant,
- on réalise une concaténation entre l'identifiant et la première clé à chiffrer.

5. Procédé selon l'une des revendications 1 à 4 **caractérisé en ce que** on autorise une visualisation du message embrouillé par déchiffrement de la première clé chiffrée en utilisant le moyen d'identification du décodeur.

6. Procédé selon l'une quelconque des revendications 1 à 5, dans lequel la première clé est reçue codée par le décodeur, **caractérisé en ce que** ladite première clé est décodée par le décodeur avant d'être chiffrée par le moyen de chiffrement (12).

7. Procédé selon l'une des revendications 1 à 6 **caractérisé en ce que** on munit le décodeur d'un programme de chiffrement et ou déchiffrement de la première clé ou d'une deuxième clé.

8. Procédé selon l'une des revendications 1 à 7 **caractérisé en ce que** on munit le décodeur d'un lecteur de carte à puce recevant une carte (7) à puce d'authentification d'un utilisateur (8) du décodeur, et
**en ce que** on chiffre la première clé dans la carte à puce.
